# EUROPÄISCHE PATENTSCHRIFT

(11) **EP 0 381 002 B1**
(45) Veröffentlichungstag und Bekanntmachung des Hinweises auf die Patenterteilung: **03.08.1994**
(21) Anmeldenummer: 90101216.1
(22) Anmeldetag: 22.01.1990
(51) Int. Cl.: B01J 20/34, B01D 53/04

(54) **Verfahren zur Desorption von Adsorbentia**
Process for the desorption of adsorbents
Procédé de désorption d'adsorbants

(30) Priorität: 02.02.1989 DE 3903154
(43) Veröffentlichungstag der Anmeldung: 08.08.1990
(73) Patentinhaber: Besitzgesellschaft Möller mbH, D-22087 Hamburg (DE)
(72) Erfinder: Möller, Joachim, D-2080 Pinneberg (DE); Voss, Hans-Joachim, Dr.-Ing., D-2117 Tostedt (DE)
(74) Vertreter: Klingseisen, Franz, Dipl.-Ing.

(56) Entgegenhaltungen:
- EP-A- 0 046 141
- EP-A- 0 146 885
- DE-A- 3 303 423
- DE-A- 3 726 565
- US-A- 3 685 256

## Beschreibung

Die Erfindung betrifft ein Verfahren zur Desorption von Adsorbentia, wie Aktivkohle, wobei ein Desorptionsmedium durch das Adsorbens hindurchgeleitet und danach die von dem Desorptionsmedium mitgeführten Adsorbate bzw. Stoffe aus diesem abgetrennt werden. Weiterhin betrifft die Erfindung eine Vorrichtung zur Durchführung des Verfahrens.

Es ist bekannt, die an der Oberfläche eines Adsorbens, wie Aktivkohle, adsorbtiv gebundenen Stoffe oder Stoffgruppen mittels Wasserdampf von der Oberfläche der Aktivkohle abzulösen und mit dem Wasserdampf abzuführen. Der auf diese Weise kontaminierte Wasserdampf muß anschließend so behandelt werden, daß die mitgeführten Stoffe oder Stoffgruppen vom Wasserdampf abgetrennt und entsorgt werden können. Diese Dekontamination des Wasserdampfs ist sehr aufwendig.

Aus EP-A-46 141 ist ein Verfahren zum Entfernen und zum Rückgewinnen flüchtiger organischer Substanzen aus industriellen Abgasen durch Adsorption an festem Adsorbens bekannt, wobei ein heißes Inertgas in einem geschlossenen Kreislauf zirkuliert und kontinuierlich oder intermittierend ausgetragen wird. Die flüchtigen organischen Substanzen werden aus dem inerten Desorptionsgas teilweise durch Kondensation mittels Kühlung und teilweise durch Readsorption an dem festen Adsorbens zurückgewonnen. Als Adsorbens wird Aktivkohle und als Desorptionsmittel Stickstoff verwendet.

Aus DE-A-37 25 565 ist ein Verfahren zur Reinigung von Lösungsmitteldämpfe und/oder sonstige Verunreinigungen enthaltenden Gasströmen bekannt, wobei zur Abscheidung der Lösungsmitteldämpfe diese an einer Adsorbensfüllung gebunden werden und danach die mit dem Lösungsmittel beladene Adsorbensfüllung durch Spülen regeneriert wird. Das Regenerieren der beladenen Adsorbensfüllung erfolgt mittels eines sauerstoffarmen Regeneriergases, das in einen Hilfsadsorber geleitet wird. Das sauerstoffarme Regeneriergas wird in der beladenen Adsorbensfüllung während der Desorption im Gegenstrom und während des Kühlens im Gleichstrom, jeweils bezogen auf die Gasströmungsrichtung während des Adsorptionsvorganges, geleitet. Durch zyklischen Wechsel der regenerierten und der beladenen Adsorbensfüllungen wird Adsorption und Regenerierung wiederholt vorgenommen.

Der Erfindung liegt die Aufgabe zugrunde, ein Verfahren der eingangs angegebenen Art so auszubilden, daß die Desorption des Adsorbens insgesamt vereinfacht und wirtschaftlich gestaltet wird.

Diese Aufgabe wird erfindungsgemäß durch die Merkmale im Patentanspruch 1 gelöst. Dieses Verfahren befaßt sich mit der Spülgasführung für die Regeneration von Adsorbentia, wobei eine Steuerung der Vorkontamination des Spülgases vor Eintritt in die Adsorbenskammer durch Zumischen von gereinigtem Spülgas und Volumenteilung so vorgenommen wird, daß das in die Adsorbenskammer eingeleitete Spülgas auf den Zustand des Adsorbens eingestellt wird. Durch die Verwendung eines trockenen Gases als Desorptionsmedium kann ein an sich bekanntes chemisches Reinigungsverfahren, wie z.B. ein Abscheideverfahren mittels hochreaktionsfähigen Dünnschichten, zur Dekontamination des trockenen Gases eingesetzt werden, wodurch insgesamt die Desorption des Adsorbens sehr vereinfacht wird. Es entfällt eine Trocknung des Adsorbens gegenüber Wasserdampf als Desorptionsmedium und das chemische Reinigungsverfahren ergibt neben dem einfachen Verfahrensablauf die Möglichkeit einer gesteuerten bzw. selektiven Dekontamination des trockenen Spülgases.

Vorteilhafte Ausgestaltungen der Erfindung sind in der nachfolgenden Beschreibung und in den weiteren Ansprüchen angegeben.

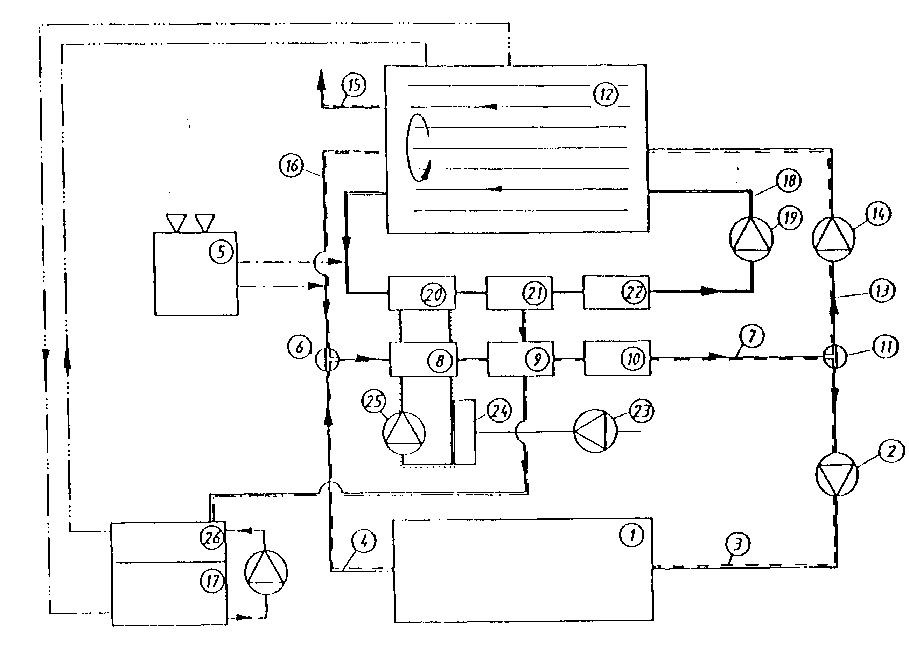

Eine beispielsweise Ausführungsform der Erfindung wird nachfolgend anhand der Zeichnung näher erläutert, die in einer schematischen Darstellung eine Vorrichtung zur Durchführung des Verfahrens wiedergibt.

Mit 1 ist eine geschlossene, mit nicht dargestellten, verschließbaren Beschickungsöffnungen versehene Kammer bezeichnet, in der sich ein zu dekontaminierendes Adsorbens, beispielsweise Aktivkohle oder ein Mischadsorbens, wie Blähbentonite-Aktivkohle, befindet. Die Aktivkohle kann als lose Schüttung oder in Form von Aktivkohlefiltern in die Kammer 1 eingebracht werden. Ein Gebläse bzw. Ventilator 2 fördert ein aufbereitetes Spülgas über eine Leitung 3 in die Kammer 1, in der das Spülgas das Adsorbens durchströmt, dabei die daran gebundenen Stoffe oder Stoffgruppen ablöst und über eine Austrittsleitung 4 aus der Kammer 1 austrägt.

Als Spülgas wird ein Gasgemisch verwendet, bspw. Kohlendioxid oder Stickstoff mit einem Edelgas, insbesondere Argon. Bevorzugt wird etwa 80 vol% getrockneter Stickstoff, etwa 20 vol% eines Edelgases, insbesondere Argon, etwa im Verhältnis 4 : 1 zur natürlichen Umluft zugemischt. Diese zuvor eingestellte Zusammensetzung des Spülgases kann beispielsweise bei 5 bereitgehalten und in die Leitungsanordnung eingespeist werden.

Das Spülgas aus der Kammer 1 gelangt über die Austrittsleitung 4 zu einer Zumischeinrichtung 6, von der aus eine Leitung 7 zu einem Kühler 8 führt, dem ein Kondensatabscheider 9 und eine Heizeinrichtung 10 nachgeschaltet sind. Von der Heizeinrichtung 10 führt die Leitung 7 zu einem Volumenteiler 11, an den die zur Kammer 1 zurückführende Leitung 3 und eine zu einer Gasreinigungseinrichtung 12 führende Leitung 13 angeschlossen ist. Ein entsprechend der Einstellung am Volumenteiler 11 vorgegebenes Teilvolumen des von der Kammer 1 kommenden, kontaminierten Spülgases wird durch ein Gebläse 14 in die Gasreinigungseinrichtung 12 gefördert, in der die im Spülgas enthaltenen Adsorbate aus dem Spülgas abgetrennt werden. Bei 15 ist ein Auslaß für dekontaminiertes bzw. gereinigtes Spülgas in die Umgebung angedeutet. Das in der Gasreinigungseinrichtung 12 gereinigte Spülgas kann über eine Leitung 16 der Zumischeinrichtung 6 ganz oder in einem Teilstrom zugeführt werden.

Die Zumischeinrichtung 6 kann ohne Steuerung der Durchtrittsquerschnitte beispielsweise in der Weise ausgebildet sein, daß die Leitungen 4 und 16 in die Leitung 7 einmünden. Der Volumenteiler 11 dagegen ist in der Weise steuerbar ausgebildet, daß der durch die Leitung 7 ankommende Volumenstrom ganz oder teilweise in die Leitung 3 umgelenkt werden kann, während in entsprechender Weise der Anschluß der Leitung 13 abgesperrt oder für einen bestimmten Teilstrom freigegeben werden kann.

Mittels der beschriebenen Vorrichtung wird das erfindungsgemäße Verfahren wie folgt durchgeführt. Die mit Spülgas aus dem Vorratsbehälter 5 gefüllte Leitungsanordnung 3,4,7,13,16 wird zunächst bei abgeschaltetem Kühler 8 mittels der Heizeinrichtung 10 auf eine Betriebstemperatur von beispielsweise 100°C vorgewärmt. Danach wird die Kammer 1 mit kontaminiertem Adsorbens beschickt und wieder verschlossen, wobei ein gewisser Anteil von Umgebungsluft in die Kammer 1 eindringt. Hierbei können die Zumischeinrichtung 6 und der Volumenteiler 11 gegenüber den Leitungen 3 und 4 abgesperrt sein. Ebenso ist es möglich, für den Beschickungsvorgang nicht dargestellte Absperrventile in den Leitungen 3 und 4 vor und hinter der Kammer 1 zu schließen. Nach der Beschickung der Kammer 1 wird zunächst unter Zufuhr von Spülgas aus dem Vorratsbehälter 5 der bei der Beschickung in das geschlossene System eingedrungene Sauerstoff so weit verdünnt, daß sich ein Sauerstoffanteil von beispielsweise 1 bis 3 vol%, vorzugsweise etwa 1 bis 1,5 vol%, einstellt, wobei überschüssiges Gas durch den Volumenteiler 11 über die Leitung 13 und den Auslaß 15 an der Gasreinigungseinrichtung 12 abgeführt werden kann.

Nach dieser Vorbereitungsstufe ist das Spülgas mit nur noch geringem Sauerstoffanteil noch kaum durch Adsorbate aus der Kammer 1 kontaminiert. Als nächster Schritt wird über die Heizeinrichtung 10 das Spülgas und damit auch das Adsorbens in der Kammer 1 auf Betriebstemperatur aufgeheizt, wobei das Spülgas lediglich durch die Leitungen 3,4 und 7 durch das Gebläse 2 gefördert wird. Bei diesem Erwärmungsvorgang erfolgt eine Vorkontaminierung des Spülgases mit Adsorbaten aus der Kammer 1. Dieser Erwärmungsschritt des Spülgases kann mit der zuvor beschriebenen Verdünnung des Sauerstoffanteils kombiniert werden bzw. sich mit diesem Verdünnungsvorgang überschneiden.

Bei der Erwärmung des Spülgases und des Adsorbens in der Kammer 1 wird vorzugsweise das Spülgas mit geringer Geschwindigkeit durch das Adsorbens in der Kammer 1 geleitet, also mit einem geringen Volumenstrom eine relativ hohe Temperatur auf das Adsorbens übertragen, anstatt mittels eines hohen Volumenstroms und geringerer Temperatur das Adsorbens bzw. die Aktivkohle aufzuheizen.

Nach einer durch entsprechende Sensoren ermittelten, ausreichenden Vorkontaminierung des Spülgases setzt die eigentliche Desorption des in der Kammer 1 enthaltenen kontaminierten Adsorbens in der Weise ein, daß bei weiterer Förderung des Spülgases mittels des Gebläses 2 durch die Leitungen 2,3,4 und 7 der Volumenteiler 11 so eingestellt wird, daß ein Teilstrom des kontanimierten Spülgases aus der Leitung 7 in die Gasreinigungseinrichtung 12 geleitet, dort dekontaminiert und über die Leitung 16 zumindest teilweise an der Zumischeinrichtung 6 in den Kreislauf des Spülgases durch die Leitungen 3,4 und 7 zurückgeführt wird. Hierdurch erfolgt nach und nach eine Verringerung der Kontamination des Spülgases im Kreislauf der Leitungen 3,4 und 7 entsprechend der Verringerung der Kontamination des Adsorbens in der Kammer 1, so daß während des gesamten Desorptionsvorganges eine Vorkontamination des Spülgases im Verhältnis zur stärkeren Kontamination des Adsorbens in der Kammer 1 erhalten bleibt. Die Differenz zwischen Vorkontamination des Spülgases und Kontaminationsgrad des Adsorbens wird dabei gering gehalten.

Zum Ausgleich von verfahrensbedingten Volumenänderungen wird Inertgas oder die vorbereitete Spülgaszusammensetzung bei 5 im dekontaminierten Bereich zugegeben, so daß man einen permanenten Druckausgleich in dem geschlossenen System erhält.

Im Bereich der Leitung 7 wird das Spülgas bei diesem Desorptionsvorgang im Kühler 8 gekühlt, worauf das dabei entstehenden Kondensat im Kondensatabscheider 9 gesammelt und von Zeit zu Zeit abgeführt wird. Dieses Kondensat kann beispielsweise in einen später beschriebenen Schichtbildnerbehälter 17 eingeleitet werden. Das so getrocknete Spülgas wird in der Heizeinrichtung 10 auf die in der Kammer 1 erforderliche Temperatur wiedererwärmt. Der Volumenteiler 11 teilt den Volumenstrom aus der Leitung 7 entsprechend der vorzugsweise durch eine Rechneranlage gesteuerten Einstellung in entsprechende Teilströme zu den Gebläsen 2 und 14.

Sofern durch das Reaktionsverhalten der verschiedenen Spülgaskomponenten eine Volumenvergrößerung eintritt, wird der Spülgasüberschuß nach Durchgang durch die Gasreinigungseinrichtung 12 gereinigt bei 15 an die Außenluft abgegeben.

Es ist sichergestellt, daß ungereinigtes, d.h. schadstoffbeladenes Spülgas nicht in die Außenluft abgeleitet werden kann.

Das Spülgas in der Leitung 16 ist schadstoffrei, reaktionswarm und es wird, soweit dies der Verfahrensablauf erfordert, mit Inertgas oder Spülgas bei 5 angereichert.

Das Spülgas am Ende der durch entsprechende Sensoren überwachten und regelbaren Volumenteilerstrecke zwischen Zumischeinrichtung 6 und Volumenteiler 11 ist schadstoffverdünnt dadurch, daß an der Zumischeeinrichtung 6 dem kontaminierten bzw. mit hoher Schadstoffbefrachtung beladenen Spülgas aus der Kammer 1 dekontaminiertes bzw. schadstofffreies Spülgas aus der Gasreinigungseinrichtung 12 zugesetzt wird. Dem Volumenteiler 11 kommt die Aufgabe zu, die Kammer 1 mit dem im Verhältnis zum Kontaminationszustand des Adsorbens in der Kammer 1 entsprechend vorkontaminierten Spülgasanteil zu beaufschlagen. Die Vorkontaminierung des Spülgases muß umso höher sein, je größer die adsorptiv gebundene Gesamtkontamination am Adsorbens ist. Mit anderen Wort wird über den steuerbaren Volumenteiler 11 immer eine Vorkontaminierung des Spülgases zur Kammer 1 eingestellt, die in einem vorgegebenen Verhältnis zu dem Kontaminationszustand des Adsorbens der Kammer 1 steht bzw. um einen vorgegebenen geringen Betrag unter der Kontamination des Adsorbens liegt. Im Verlaufe des Desorptionsvorganges wird der am Volumenteiler 11 eingestellte Volumenstrom durch die Leitung 3 eine immer geringer werdende Restkontamination aufweisen, da der durch die Leitung 13 transportierte Volumenanteil in der Gasreinigungseinrichtung kontinuierlich gereinigt und über die Leitung 16 in den Kreislauf zurückgeführt wird.

Die Gasreinigungseinrichtung 12 kann in verschiedener Weise als chemische Abscheideeinrichtung für die Adsorbate im Spülgas ausgebildet sein. Beispielsweise kann bei 12 ein Trockenpulververfahren oder ein Wirbelschichtverfahren für die Abtrennung der Adsorbate vorgesehen werden. Vorzugsweise wird ein Abscheideverfahren mittels hoch reaktionsfähiger Dünnschichten vorgesehen, an denen das mit Schadstoffen beladene Spülgas entlangströmt. Ein geeigntes Verfahren bzw. eine geeignete Vorrichtung ist in der DE-PS 33 44 875 beschrieben. Bei dem in der Zeichnung dargestellten Ausführungsbeispiel ist diese Abscheidevorrichtung nach der zuvor genannten DE-PS schematisch wiedergegeben. Diese im folgenden als Trockenkammerreaktor bezeichnete, an sich bekannte Gasreinigungseinrichtung 12 benötigt für die Vorkonditionierung der aus frischem Schichtbildner aufgezogenen Reaktionsschichten einen Trockengaskreislauf 18, wobei als Trägergas zweckmäßigerweise ein in seiner Zusammensetzung dem Spülgasadditiv gleichendes Inertgas bzw. das Spülgasgemisch aus dem Vorratsbehälter 5 verwendet wird. Der geschlossene Kreislauf 18 wird durch ein Gebläse 19 mit konstanter Förderleistung bewegt, wobei in einem Kühler 20 das Trockengas bis unter den Taupunkt der Reaktionsfeuchte abgekühlt, in einem Kondensatsammler 21 das anfallende Kondensat abgeschieden und in einem anschließenden Gaserhitzer 22 wieder auf Arbeitstemperatur gebracht wird. Das Kondensat vom Kondensatsammler 21 kann ebenfalls dem Schichtbildnerbehälter 17 zugeleitet werden.

Bei dem dargestellten Ausführungsbeispiel wird die für die Kühler 8 und 20 erforderlich Kühlleistung in einem mittels eines Gebläses 23 durch Luft gekühlten Verdampfer 24 erzeugt und über einen Wärmeträgerölkreislauf 25 zu den Kühlern 8 und 20 transportiert.

Der für die kontinuierliche Trockenschichterzeugung im Trockenkammerreaktor 12 erforderliche hochreaktionsfähige Schichtbildner wird aus einer nicht dargestellten Konditionieranlage in den Behälter 17 eingeleitet und über ein Plattenfeinfilter 26, in dem Reaktionsprodukte abgeschieden werden, an die Schichtträgerplatten in dem Trockenkammerreaktor 12 herangeführt. Reaktionsprodukte werden in dem Vorratsbehälter 17 gesammelt und zur Entsorgung abgeleitet.

Es können verschiedene Abwandlungen bzw. Zusatzeinrichtungen bei dem Verfahren nach der Erfindung vorgesehen werden. So kann bei dem in einem vollkommen geschlossenen System ablaufenden Spülvorgang, in dem das Spülgas durch Zwangsförderung mittels des Gebläses 2 umgewälzt wird, ein erwünschter Feuchtigkeitswert beispielsweise dadurch eingestellt werden, daß an der Heizeinrichtung 10, mittels der die für die Desorption erforderliche Temperatur des Spülgases eingestellt wird, Wasser eingespritzt wird.

Die Konzentration des verwendeten Spülgases kann vor Eintritt in das kontaminierte Adsorbens durch entsprechende Sensoren derart überwacht werden, daß eine unkontrollierte thermische Oxidation des Abdsorbens auch nach teilweiser oder vollständiger Ablösung des Adsorbats nicht auftreten kann.

Die Änderung der Konzentration des Spülgases nach Austritt aus der Kammer 1 kann derart meßtechnisch erfaßt werden, daß nach den festgestellten Differenzwerten die Art und Menge des Schichtbildners im Vorratsbehälter 17 auf die wechselnden Abscheidungserfordernisse eingestellt werden kann. Durch entsprechende Einstellung des Schichtbildners kann selektiv eine Dekontamination des Spülgases vorgenommen werden.

Bei dem beschriebenen Verfahren ist es möglich, daß Spülgas nach Abschluß der Desorption des Adsorbens in der Kammer 1 kurzzeitig derart aufzuheizen, daß biologische, bakterielle und viröse Besiedelungen des Adsorbens abgebaut werden können. Diese Abbauprodukte können durch Ausschwemmen unter Verwendung bekannter Verfahren, beispielsweise des Integro-Reakt-Verfahrens, abgetragen werden.

Bei dem oben beschriebenen Verfahrensablauf wird das Spülgas dadurch vorkontaminiert, daß das Spülgas vor Einsetzen der Desorption und nach Aufwärmung auf eine vorgegebene Temperatur durch das kontaminierte Adsorbens hindurchgeleitet wird. In diesem Fall kann nach Durchströmen des kontaminierten Adsorbens dem Spülgas ein Teilstrom an frischem bzw. gereinigtem Spülgas zugesetzt und auf diese Weise der Grad der Vorkontaminierung des Spülgases auf den Kontaminationsgrad des Adsorbens eingestellt werden.

Es ist aber auch möglich, die Vorkontaminierung des Spülgases durch Zugabe eines gasförmigen Additivs vor Eintritt in den geschlossenen Spülkreislauf vorzunehmen. Dem Spülgas wird auf der Eintrittsseite der Kammer 1 beispielsweise zwischen Volumenteiler 11 und Gebläse 2 das gasförmige Additiv zudosiert und es gelangt dann gemeinsam mit dem Spülgas durch das kontaminierte Adsorbens, worauf es anschließend anteilig in der Gasreinigungseinrichtung 12 gemeinsam mit aufgenommenen Kontaminationen abgeschieden wird.

Die Zugabe des zur Vorkontaminierung des Spülgases ausgewählten gasförmigen Additivs erfolgt für einen kurzen, vorherbestimmten Zeitreum volumetrisch dosiert kontinuierlich zu Beginn des Rückspülvorganges bei Erreichen der Rückspültemperatur am Spülgaseintritt in die Kammer 1. Die Dosierung kann in der Weise erfolgen, daß der Grad der Vorkontaminierung des Spülgases auf den Kontaminationsgrad des Adsorbens eingestellt wird. In diesem Falle ist es nicht mehr erforderlich, einen Teilstrom an frischem bzw. gereinigtem Spülgas dem vorkontaminierten Spülgas zuzusetzen, um den Grad der Vorkontaminierung auf den Kontaminationsgrad des Adsorbens einzustellen.

Zur Vorkontaminierung des Spülgases werden gasförmige Additive gewählt, deren Anlagerungsverhalten an dem zu reaktivierenden Adsorbens mit dem der Primärkontamination vergleichbar sind, wie z.B. Trichlormethan (Chloroform) bei mit Dichlormethylen (Farblösungsmittel) kontaminierten Adsorbentia, und deren Reaktionsverhalten mit dem Schichtbildner im Trockenkammerreaktor bzw. der Gasreinigungseinrichtung 12 bekannt und steuerbar sind, wie Zerfall in Chlorwasserstoff, Ameisensäure und Kohlenmonoxid als Zwischenreaktionsprodukte (Hien'sche Reaktion), Kochsalz und Soda als Abbauendprodukte, wobei die Zwischenreaktionsprodukte den Abbau oder die Einschließung der im Spülgas mitgeführten Primärkontaminationen begünstigten.

## Patentansprüche

1. Verfahren zur Desorption von Adsorbentia, wie Aktivkohle, wobei in einem geschlossenen Kreislauf als Desorptionsmedium ein trockenes Spülgas verwendet wird, das vor Einsetzen der Desorption auf eine vorgegebene Temperatur erwärmt und in der Weise vorkontaminiert wird, daß das Spülgas nach dem Durchströmen des Adsorbens in einem Teilstrom zurück durch das Adsorbens geleitet wird, während der andere Teilstrom durch ein chemisches Reinigungsverfahren dekontaminiert wird, wobei das dekontaminierte Spülgas dem nach Durchströmen des Adsorbens kontaminierten Spülgas wieder zugemischt wird, bevor dieser kontaminierte Spülgasstrom in Teilströme aufgeteilt wird.

2. Verfahren nach Anspruch 1, dadurch gekennzeichnet, daß der Grad der Vorkontaminierung des Spülgases vor Einsetzen der Desorption auf den Kontaminationsgrad des Adsorbens durch Einstellen der Zumischung und der volumenteilung eingestellt wird.

3. Verfahren nach den vorhergehenden Ansprüchen,
dadurch gekennzeichnet,
daß das kontaminierte Spülgas in einem Kühler abgekühlt, dabei anfallendes Kondensat abgeschieden und dann wieder durch eine Heizeinrichtung auf die Betriebstemperatur aufgeheizt wird, bevor es erneut durch das Adsorbens hindurchgeleitet wird.

4. Verfahren nach den vorhergehenden Ansprüchen,
dadurch gekennzeichnet,
daß Volumenänderungen während des Verfahrensablaufs durch Zufuhr von vorbereitetem Spülgas ausgeglichen werden, während überschüssiges Spülgas in gereinigter Form nach Verlassen der chemischen Reinigungsstufe an die Umgebung abgegeben wird.

5. Verfahren nach den vorhergendenen Ansprüchen,
dadurch gekennzeichnet,
daß das Spülgas nach Abschluß der Desorption des Adsorbens kurzzeitig auf eine erhöhte Temperatur erhitzt wird, um biologische, bakterielle und viröse Besiedelungen des Adsorbens abzubauen.

6. Verfahren nach den vorhergehenden Ansprüchen,
dadurch gekennzeichnet,
daß als Spülgas ein Gemisch aus Kohlendioxid oder Stickstoff mit Inertgas verwendet wird.

7. Verfahren nach den vorhergehenden Ansprüchen,
dadurch gekennzeichnet,
daß das Spülgas aus Stickstoff und Argon besteht.

8. Verfahren nach den vorhergehenden Ansprüchen,
dadurch gekennzeichnet,
daß das Spülgas aus etwa 80 vol% Stickstoff und etwa 20 vol% Argon besteht.

9. Vorrichtung zur Durchführung des Verfahrens nach den vorhergehenden Ansprüchen,
dadurch gekennzeichnet,
daß an einen Kreislauf mit einer Kammer (1) zur Aufnahme des kontaminierten Adsorbens, einer Zumischeinrichtung (6) und einem Volumenteiler (11) ein Kreislauf mit einer Gasreinigungseinrichtung (12) über die Zumischeinrichtung (6) und den Volumenteiler (11) angeschlossen ist.

10. Vorrichtung nach Anspruch 9,
dadurch gekennzeichnet,
daß der Spülgaskreislauf zwischen Zumischeinrichtung (6) und Volumenteiler (11) einen Kühler (8) mit nachgeschaltetem Kondensatabscheider (9) und eine Heizeinrichtung (10) aufweist.

11. Vorrichtung nach den Ansprüchen 9 und 10,
dadurch gekennzeichnet,
daß die Gasreinigungseinrichtung (12) als Trockenkammerreaktor ausgebildet ist, in dem zur Dekontamination des Spülgases hochreaktive Dünnschichten von dem kontaminierten Spülgas überströmt werden.

## Claims

1. Process for the desorption of adsorbent substances such as activated charcoal, wherein the desorption medium used in a closed circuit is a dry rinsing gas which is heated to a predetermined temperature before desorption begins and is pre-contaminated by passing the rinsing gas through the adsorbent and then passing a partial current of said gas back through the adsorbent material, whilst the other partial current is decontaminated by a chemical purifying process, the decontaminated rinsing gas being added back to the rinsing gas contaminated after flowing through the adsorbent, before this contaminated current of rinsing gas is divided into partial currents.

2. Process according to claim 1, characterised in that the degree of pre-contamination of the rinsing gas is adapted, before desorption begins, to the level of contamination of the adsorbent by adjusting the mixture and the division by volume.

3. Process according to the preceding claims, characterised in that the contaminated rinsing gas is cooled in a condenser, the condensate obtained is separated off and then heated up again to the operating temperature by means of a heating device before being passed through the adsorbent once more.

4. Process according to the preceding claims, characterised in that changes in volume during the course of the process are equalised by the addition of prepared rinsing gas, whilst excess rinsing gas in purified form is released into the environment after leaving the stage of chemical purification.

5. Process according to the preceding claims, characterised in that, after desorption of the adsorbent has ended, the rinsing gas is briefly heated to elevated temperature in order to break down any biological, bacterial and viral contamination of the adsorbent.

6. Process according to the preceding claims, characterised in that the rinsing gas used is a mixture of carbon dioxide or nitrogen with inert gas.

7. Process according to the preceding claims, characterised in that the rinsing gas consists of nitrogen and argon.

8. Process according to the preceding claims, characterised in that the rinsing gas consists of about 80% by volume of nitrogen and about 20% by volume of argon.

9. Apparatus for carrying out the process according to the preceding claims, characterised in that a circuit having a gas purifying device (12) is connected to a circuit having a chamber (1) for receiving the contaminated adsorbent, a mixing device (6) and a volume divider (11), via said mixing device (6) and said volume divider (11).

10. Apparatus according to claim 9, characterised in that the rinsing gas circuit has, between the mixing device (6) and the volume divider (11), a condenser (8) with a condensate separator (9) connected downstream thereof and a heating device (10).

11. Apparatus according to claims 9 and 10, characterised in that the gas purifying device (12) is constructed as a dry chamber reactor in which the contaminated rinsing gas flows over highly reactive thin layers in order to decontaminate said rinsing gas.

## Revendications

1. Procédé de désorption d'adsorbants tels que du charbon actif, un gaz de lavage sec étant utilisé en tant que moyen de désorption dans un circuit fermé, ce gaz de lavage étant chauffé avant la mise en oeuvre de la désorption à une température fixée au préalable et étant précontaminé caractérisé en ce que, après son passage à travers l'adsorbant, le gaz de lavage est reconduit, dans un courant partiel, à travers l'adsorbant et en sens inverse, tandis que l'autre courant partiel est décontaminé au moyen d'un procédé de purification chimique, le gaz de lavage décontaminé étant ajouté à nouveau au gaz de lavage contaminé après son passage à travers l'adsorbant, avant que ce courant de gaz de lavage décontaminé soit divisé en courants partiels.

2. Procédé selon la revendication 1, caractérisé en ce que le degré de la précontamination du gaz de lavage est ajusté au degré de contamination de l'adsorbant au moyen du réglage du mélange et de la division des volumes et ceci avant la mise en oeuvre de la désorption.

3. Procédé selon les revendications précédentes, caractérisé en ce que le gaz de lavage contaminé est refroidi dans un refroidisseur, le condensat généré étant séparé et ensuite à nouveau chauffé jusqu'à la température de service au moyen d'une installation de chauffage, avant d'être à nouveau conduit à travers l'adsorbant.

4. Procédé selon les revendications précédentes, caractérisé en ce que la variation de volume se produisant lors du déroulement du procédé est équilibrée au moyen d'introduction de gaz de lavage préparé, tandis que du gaz de lavage excédentaire dans l'état purifié est cédé au milieu lorsqu'il quitte l'étape de purification chimique.

5. Procédé selon les revendications précédentes, caractérisé en ce que, la désorption de l'adsorbant étant terminée, le gaz de lavage est chauffé pendant une courte durée à une température plus élevée, de manière à détruire les colonies biologiques, bactérielles et virales de l'adsorbant.

6. Procédé selon les revendications précédentes, caractérisé en ce qu'un mélange à base de dioxyde de carbone ou d'azote avec un gaz inerte est utilisé en tant que gaz de lavage.

7. Procédé selon les revendications précédentes, caractérisé en ce que le gaz de lavage se compose d'azote et d'argon.

8. Procédé selon les revendications précédentes, caractérisé en ce que le gaz de lavage se compose d'environ 80 % en volume d'azote et d'environ 20 % en volume d'argon.

9. Dispositif pour la mise en oeuvre du procédé selon les revendications précédentes, caractérisé en ce qu'un circuit comportant un dispositif de purification de gaz (12) est relié à un circuit comportant une chambre (1) destinée à recevoir l'adsorbant contaminé, un dispositif de mélange (6) et un séparateur de volume (11) par l'intermédiaire du dispositif de mélange (6) et du séparateur de volume (11).

10. Dispositif selon la revendication 9, caractérisé en ce que le circuit de lavage de gaz présente un refroidisseur (8) auquel est relié en aval un séparateur de condensat (9) et un dispositif de chauffage (10), entre le dispositif de mélange (6) et le séparateur de volume (11).

11. Dispositif selon les revendications 9 et 10, caractérisé en ce que le dispositif de purification de gaz (12) est constitué à la manière d'une chambre de séchage de réacteur dans laquelle des couches minces hautement réactives provenant du gaz de lavage contaminé sont répandues pour la décontamination du gaz de lavage.
